# EUROPEAN PATENT APPLICATION

(11) **EP 2 693 555 A1**
(43) Date of publication of application: **05.02.2014**
(21) Application number: 11862514.4
(22) Date of filing: 30.11.2011
(51) Int. Cl.: H01M 10/052, H01M 4/38, H01M 4/60, H01M 10/0565

(54) **HIGHLY ADVANCED LITHIUM-POLYMER BATTERY INCLUDING SILICON NANOPARTICLES SUBSTITUTED WITH POLYMERS AND SELF-ASSEMBLING BLOCK COPOLYMERS**

(30) Priority: 28.03.2011 KR 20110027733
(71) Applicant: Postech Academy-Industry- Foundation, Gyungbuk 790-784 (KR)
(72) Inventor: PARK, Moon Jeong, Pohang-si 780-784 (KR); CHOI, Il Young, Pohang-si 791-170 (KR)
(74) Representative: Ahner, Philippe
(86) International application number: PCT/KR2011/009188
(87) International publication number: WO 2012/134029

(57) **Abstract**

The present invention relates to a highly advanced lithium-polymer battery and to a method for manufacturing same, and more particularly, to a highly advanced lithium-polymer battery including silicon nanoparticles substituted with polymers and self-assembling block copolymers. According to the present invention, the lithium-polymer battery is a highly advanced lithium-polymer secondary battery consisting of: an anode including anode active particles, wherein polymers are formed on the surface of the anode; a cathode; and a polymer electrolyte including block copolymers. According to the present invention, a high-capacity lithium-polymer battery, which is stable during charging/discharging cycles, can be provided.

## Description

### Technical Field

The present invention relates to a highly advanced lithium-polymer battery and a method of manufacturing the same, and, more particularly, to a highly advanced lithium-polymer battery comprising silicon nanoparticles substituted with a polymer and a self-assembling block copolymer.

### Background Art

Recently, lithium batteries are receiving attention as a next-generation energy source for solving global warming because of high energy density and recyclable properties thereof, and are being applied to a variety of fields. Although lithium batteries are already widely utilized in portable electronics, the development of next-generation lithium batteries having a large capacity to replace gasoline energy is still painstakingly slow. Next-generation batteries should have an energy density of 200 Wh/kg or more, charging/discharging cycles of 1000 or more, and durability so as to be operable even at -40 - 85°C.

A lithium-polymer battery typically includes a cathode, an anode and a polymer electrolyte. The cathode of the lithium-polymer battery includes a cathode active material, a conductive material, a binder, etc., and typical examples of the conductive material may include nickel powder, cobalt oxide, titanium oxide, ketjen black, acetylene black, furnace black, graphite, carbon fibers, fullerene, etc., and the cathode active material which is known in the art may include compounds which enable reversible intercalation/deintercalation of lithium, such as LiMn₂O₄, LiCoO₂, LiNiO₂, LiFeO₂, etc. There is thus a need to improve anode active materials and polymer electrolytes in order to improve performance of the batteries. Accordingly, research into improvements in performance of anode active materials and polymer electrolytes is ongoing.

Products using graphite and so on as the initial anode active material have been mostly utilized, but are problematic because of low charging/discharging capacities thereof, and methods of increasing charging/discharging capacities of graphite are known to be limited in terms of commercialization thereof. Thus, research into high-capacity anode active materials such as metal silicon is carried out, but upon charging/discharging, volume expansion is increased by at least four times when using an alloy of lithium and silicon such as Li_{1.71∼4.4}Si compared to when using silicon alone, and thereby, during charging/discharging, a silicon electrode structure may break and thus discharging capacity is drastically lowered to 20% or less of initial capacity, undesirably losing the function as the electrode active material. In order to achieve stabilization of the electrode active material, formation of nano-sized silicon particles, alloying thereof with transition metals such as nickel, copper, etc., changes in oxygen content of carbon/silicon composites or silicon, improvements in electrode binders, etc. have been attempted, but a high capacity of 1000 mAh/g or more of silicon active materials fails to exhibit or problems of lowering of capacity depending on cycle progression still remain.

Meanwhile, in the case where the crystalline structure of a metal active material is converted to be amorphous, crystalline stability is known to be high with respect to expansion and shrinkage of volume upon intercalation/deintercalation of lithium. Recently, methods of converting crystalline silicon into amorphous silicon are reported to include melt spinning for quenching for short time via melting at high temperature but are limited in terms of industrial application.

In the case of an electrolyte, in order to obtain safety for preventing the risk of generation of fire or durability for preventing the decomposition of an electrolyte, a polymer electrolyte comprising a salt and a polymer is being developed.

Also, a polymer electrolyte includes a polymer, a salt, a non-aqueous organic solvent (selective) and other additives, and manifests an ionic conductivity of about 10⁻³ ∼ 10⁻⁸ S/cm at room temperature, and products having high ionic conductivity and superior mechanical and electrical stability during charging/discharging cycles have to be provided. Although initial research into solid polymer electrolytes which are prepared by adding a lithium salt to polyethylene oxide, polypropylene oxide, etc. to obtain a mixture which is then dissolved in a co-solvent and then cast has been carried out, problems occur in which the mechanical stability of PEO chains becomes poor at a temperature equal to or higher than a glass transition temperature (Tg). Thorough research into increasing mechanical stability to solve such problems is ongoing, but problems of deterioration of charging/discharging properties may be incurred upon application to lithium-polymer batteries.

Accordingly, methods of introducing inorganic nanoparticles to a polymer electrolyte having no solvent are being developed, but the resulting electrical conductivity is insufficient for commercialization. A plasticized polymer electrolyte is prepared in such a manner that an organic solvent and a lithium salt are added to a polymer such as polymethylmethacrylate, polyacrylonitrile, polyvinyl chloride, polyvinylidene fluoride, etc., and the resulting mixture is dissolved in a co-solvent and then cast, but it is difficult to commercialize because of poor mechanical properties due to the use of the organic solvent.

However, the conventional methods are problematic because anode active materials or polymer electrolytes have still poor properties, and also have no discussion for compatibility therebetween, and thus limitations are imposed on development of high-efficiency lithium-polymer batteries.

### Disclosure

### Technical Problem

An object of the present invention is to provide an anode active material for a lithium-polymer battery, which may be resistant to changes in volume by lithium ions during repeated charging/discharging.

Another object of the present invention is to provide a polymer electrolyte for a lithium-polymer battery, which may satisfy both mechanical and electrical properties.

A further object of the present invention is to provide a highly advanced lithium-polymer battery, which is optimized in an anode active material which may be resistant to changes in volume by lithium ions during charging/discharging and also in a polymer electrolyte which may satisfy both mechanical and electrical properties.

### Technical Solution

According to the present invention, a lithium-polymer battery is a highly advanced lithium-polymer secondary battery, comprising an anode including anode active particles having a polymer formed on the surface thereof; a cathode; and a polymer electrolyte including a block copolymer,.

In an aspect of the present invention, there is provided a lithium-polymer battery comprising an anode including anode active particles having a polymer formed on the surface thereof; a cathode; and a polymer electrolyte.

In another aspect of the present invention, there is provided a secondary battery comprising an anode; a cathode; and a polymer electrolyte, wherein the polymer electrolyte includes a self-assembling block copolymer.

In still another aspect of the present invention, there is provided a secondary battery comprising an anode including silicon nanoparticles having a polymer bound thereto; a cathode; and a polymer electrolyte, the anode having a thickness of 60 nm or less.

In yet another aspect of the present invention, there is provided a polymer electrolyte for a secondary battery, comprising a self-assembling block copolymer including a hydrophobic block and a hydrophilic block; and a nonionic plasticizer, a nonvolatile ionic liquid, or combinations thereof.

In a further aspect of the present invention, there is provided an anode fo r a secondary battery, including silicon nanoparticles having polyethylene oxide bound to the surface thereof as an anode active material.

In the present invention, the anode active particles referto particles in the anode, which undergo changes in volume by lithium ions during charging/discharging of the battery. In the present invention, the formation of a polymer means that the polymer is physically or chemically bound to the surface of anode active particles.

In the present invention, the nonionic plasticizer is a material which does not actually dissociate into ions and lowers the Tg of a polymer, and the nonvolatile ionic liquid indicates a material which is not volatilized and in which ions are coupled but are present in a liquid state.

Although the polymer formed on the surface of the anode active particles is not theoretically limited, it functions as a buffer so that the particles may be resistant to changes in volume during charging/discharging with lithium ions. Preferably, a polymer having good transport properties for lithium ions is used so that approach of lithium ions to the particles is not prevented.

In an embodiment of the present invention, the anode active particles preferably include silicon particles having a basic capacity suitable for facilitating the binding with the polymer, and the polymer is preferably a polyalkylene oxide-based polymer having good ionic transport properties for lithium ions.

In the present invention, polyalkylene oxide may include polyethylene oxide, polypropylene oxide, and polyethylenepropylene oxide. Particularly useful is polyethylene oxide.

Also, the molecular weight of the polymer may be appropriately adjusted depending on the extent of expansion, and the weight average molecular weight thereof is preferably 200 ∼ 20,000, more preferably 500 ∼ 10,000, and much more preferably 1,000 - 5,000. In the case where the molecular weight thereof is too low, the length of the polymer may become short, making it difficult to provide sufficient resistance to changes in volume upon charging/discharging. In contrast, if the molecular weight thereof is too high, it is difficult to prepare the polymer or to bind it with the particles.

In the present invention, the silicon particles are those which may be coupled with lithium ions, and may be amorphous particles so as to increase the charging capacity of a secondary battery.

In the present invention, the silicon particles may be nanoparticles, preferably nanoparticles having a size of 1 - 100 nm, and more preferably particles having a size of about 10 nm.

In the present invention, in the silicon nanoparticles (SiNPs) having polyalkylene oxide bound thereto, the weight ratio of polyalkylene oxide and silicon nanoparticles may be adjusted depending on the extent of expansion of volume of the lithium ion battery, and is preferably set to the range of 1:10 - 10:1, and more preferably 7:3 ∼ 3:7. If the amount of the silicon nanoparticles is too large, insufficient resistance to volume expansion may be obtained in some cases. Also, if the amount of polyalkylene oxide is too large, properties of the battery may deteriorate upon repetition of charging/discharging.

In the present invention, the anode including silicon particles surface-treated with polyalkylene oxide is configured such that the silicon particles surface-treated with polyalkylene oxide are used as the main component, and the addition of an intermediate such as carbon or polyvinylidene chloride which aids electrical conductivity is not limited.

In an embodiment of the present invention, the anode may be manufactured by using polyalkylene oxide in an amount of 50 wt% or more, and preferably 70 wt% or more. For example, the anode may be manufactured by mixing 60 ∼ 90 wt% of silicon particles surface-treated with polyalkylene oxide, 1 ∼ 20 wt% of carbon, and 1 ∼ 20 wt% of polyvinylidene chloride.

In the present invention, the polymer electrolyte is not theoretically limited, but may reduce the diffusion distance of lithium ions by the repeating nano-structure owing to self-assembling properties of the block copolymer, thus increasing the capacity of the battery.

In the present invention, the block copolymer includes a hydrophobic block and a hydrophilic block and thus preferably has self-assembling properties. The hydrophobic block has higher Tg than that of the hydrophilic block, and the hydrophilic block preferably has higher conductivity for lithium ions than the hydrophobic block. In this case, the hydrophobic block may improve physical properties of the polymer electrolyte, for example, mechanical strength, and the hydrophilic block may improve conductivity for lithium ions.

In the present invention, the hydrophobic block preferably has higher Tg by at least 30°C, more preferably by at least 40°C, and much more preferably by at least 50°C than that of the hydrophilic block.

In an embodiment of the present invention, the polymer electrolyte may be composed exclusively of the block copolymer, but preferably includes a mixture of the polymer having conductivity for lithium ions and the block copolymer, and the block copolymer may be used in an amount of 10 - 90 wt%, and preferably 20 - 80 wt%, based on the polymer electrolyte.

In the present invention, the amounts and the molecular weights of the hydrophobic block and the hydrophilic block may be adjusted depending on the extent of self-assembly, and are preferably adjusted in the weight ratio range of about 20:80 - 80:20.

In an embodiment of the present invention, the polymer electrolyte may be composed of a polyethylene oxide (PEO) polymer and a polystyrene (PS)-block-polyethylene oxide block copolymer, and the polyethylene oxide polymer and the block copolymer may be mixed at the same ratio, and the molecular weight of polyethylene oxide may be about 1 ∼ 5 kg/mol, and the molecular weight of the block copolymer is set such that polyethylene oxide-block-polystyrene may be used in the range of from 10-b-10 kg/mol to 50-b-50 kg/mol. In the present invention, the polymer electrolyte including the block copolymer preferably inc ludes a nonionic plasticizer so as to further increase ionic conductivity. The nonionic plasticizer may decrease Tg of the hydrophobic block of the block copolymer to increase ionic conductivity. Even after charging/discharging cycles progress, the lamellar structure of the block copolymer may be maintained. The nonionic plasticizer may be selected from among dioctylphthalate, dibutylphthalate, diethylphthalate, dimethylphthalate (DMP). In the case of the block copolymer including polystyrene, the use of DMP is preferable.

In the present invention, the polymer electrolyte including the block copolymer may further include an ionic liquid such as [EMlm][BF4] so as to further increase ionic conductivity. In an aspect of the present invention, the anode of the lithium-polymer battery includes anode active particles surface-treated with the polymer, and has a thickness of 80 µm or less.

As the anode for a lithium-polymer battery according to the present invention becomes thinner, charging/discharging capacities of the battery may be improved. Hence, the thickness of the anode is preferably maintained to 60 µm or less, more preferably 30 µm or less, and much more preferably 20 µm or less.

In an embodiment of the present invention, in the case where the lithium-polymer battery includes the polyethylene oxide electrolyte including the block copolymer, when the thickness of the anode is 60 µm, charging/discharging capacities may exhibit 705 mAh/g and 707 mAh/g, which are increased by 30% or more compared to when using the anode having a thickness of 100 µm. When the thickness of the anode is 30 µm, charging/discharging capacities may exhibit 1390 mAh/g and 1403 mAh/g, which are increased by at least two times compared to when using the anode having a thickness of 60 µm. When the thickness of the anode is 20 µm, charging/discharging capacities may exhibit 1851 mAh/g and 1953 mAh/g.

In an embodiment of the present invention, the cathode includes a cathode active material, a conductive material, and a binder, and typical examples of the conductive material may include nickel powder, cobalt oxide, titanium oxide, ketjen black, acetylene black, furnace black, graphite, carbon fibers, fullerene, etc., and examples of the cathode active material which is known in the art may include LiMn₂O₄, LiCoO₂, LiNiO₂, LiFeO₂, V₂O₅, TiS and MoS, which are compounds enabling reversible intercalation/deintercalation of lithium ions.

In addition, the lithium secondary battery according to the present invention may have a variety of shapes, such as a cylindrical shape, a square shape, a coin shape, a sheet shape, etc., and may be applied to large batteries suitable for use in transport devices, including electric vehicles, hybrid electric vehicles (HEV), fuel cell electric vehicles (FCEV), cell scooters, etc.

### Advantageous Effects

According to the present invention, a novel anode active material which can be resistant to expansion of volume of an anode by lithium ions during repeated charging/discharging and a lithium-polymer battery using the same are provided.

Also, the lithium-polymer battery according to the present invention is a high-capacity lithium-polymer battery having high stability thanks to the use of a polymer electrolyte including a block copolymer.

### Description of Drawings

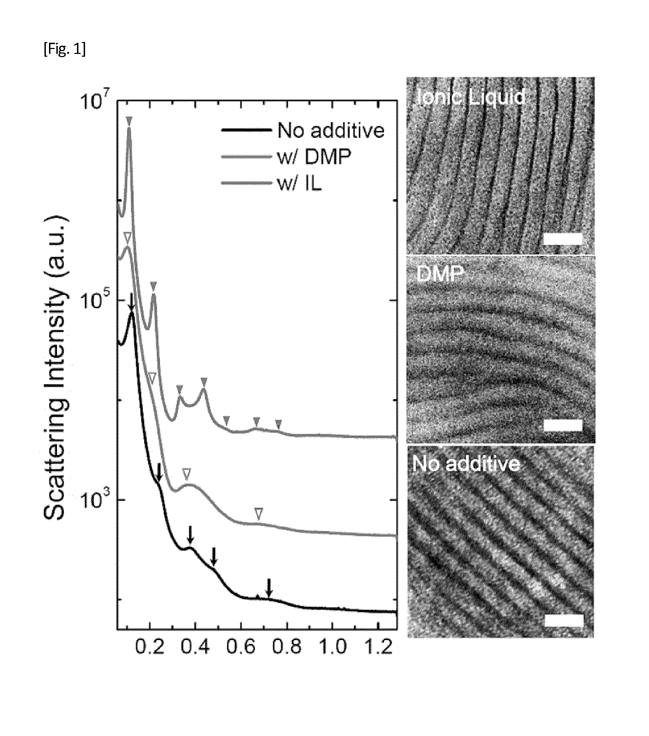

FIG. 1 illustrates SAXS (Small Angle X-ray Scattering) profiles and TEM (Transmission Electron Microscope) images of polymer electrolytes according to the present invention, wherein Example 1 is represented by "No additive," Example 2 is represented by "W/DMP," and Example 3 is represented by "W/IL," and the scattering profiles are vertically offset for clarity, and the arrows (↓, neat), the inverted open triangles (∇, DMP), and the inverted filled triangles (▼, ionic liquid) show Bragg peaks at q*, 2q*, 3q*, 4q*, 6q*; q*, 2q*, 3q*, 4q*; and q*, 2q*, 3q*, 4q*, 5q*, 6q*, 7q*, and TEM images when no additive, DMP and ionic liquid are incorporated into PS-PEO/PEO show the qualitatively similar lamellar structures, and the salt-doped PEO domains are stained black by RuO₄, and scale bars represent 100 nm;
FIG. 2 illustrates the results of measurement of ionic conductivity of the polymer electrolytes according to the present invention;
FIG. 3 illustrates galvanostatic charging/discharging curves of coin-type half-cells including an anode of PEO-SiNPs, as a battery according to the present invention, at a rate of 0.2 A/g in the range of 0 - 4.5 V, wherein (a) shows the use of a PS-PEO/PEO electrolyte (no additive), (b) shows the use of a PS-PEO/PEO electrolyte impregnated with an ionic liquid, and (c) shows the use of a PS-PEO/PEO electrolyte doped with DMP, wherein the charging/discharging capacities and Coulombic efficiency versus the cycle number are plotted in the right side of each voltage profile;
FIG. 4 illustrates a charging/discharging graph of coin-type half-cells comprising a DMP-doped PS-PEO/PEO solid electrolyte and an anode of PEO-SiNPs at a rate of 0.2 A/g in the range of 0 - 4.5 V, depending on the thickness of the anode;

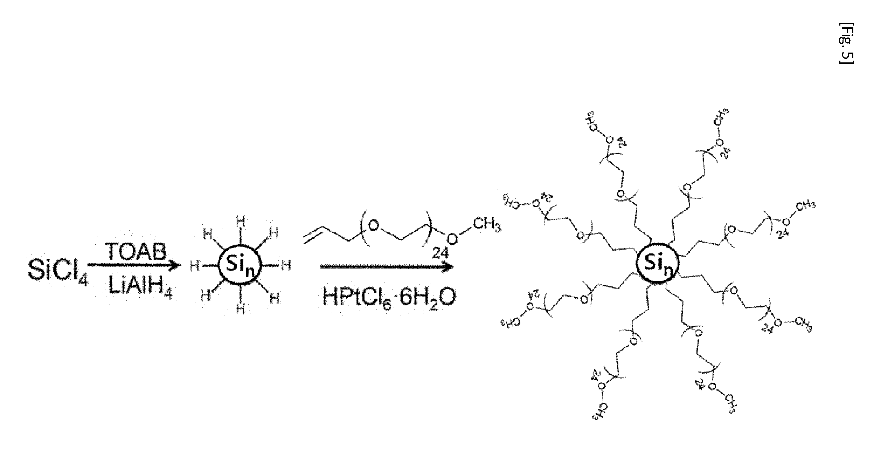

FIG. 5 schematically illustrates synthesis of silicon particles used in the anode of the battery according to the present invention;

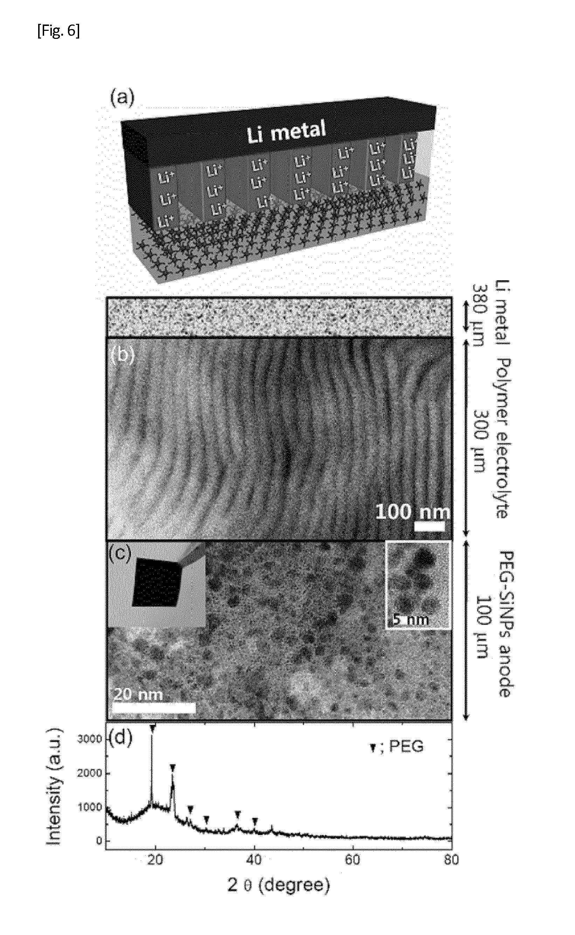

FIG. 6 illustrates the configuration of a lithium-polymer battery according to the present invention, wherein (a) shows a coin-type half-cell comprising lithium metal, a polymer electrolyte, and an anode of PEO-SiNPs, (b) shows a TEM image of the polymer electrolyte (no additive case) having a lamellar structure, and the salt-doped PEO layer is stained by RuO₄ and is thus seen to be black, (c) shows an FIB-TEM image of the anode of PEO-SiNPs in which the inset box depicts the photograph of the anode having a size of 2 x 2 cm x 100 µm, and (d) shows an XRD pattern of the anode before cycling, which indicates amorphous silicon;

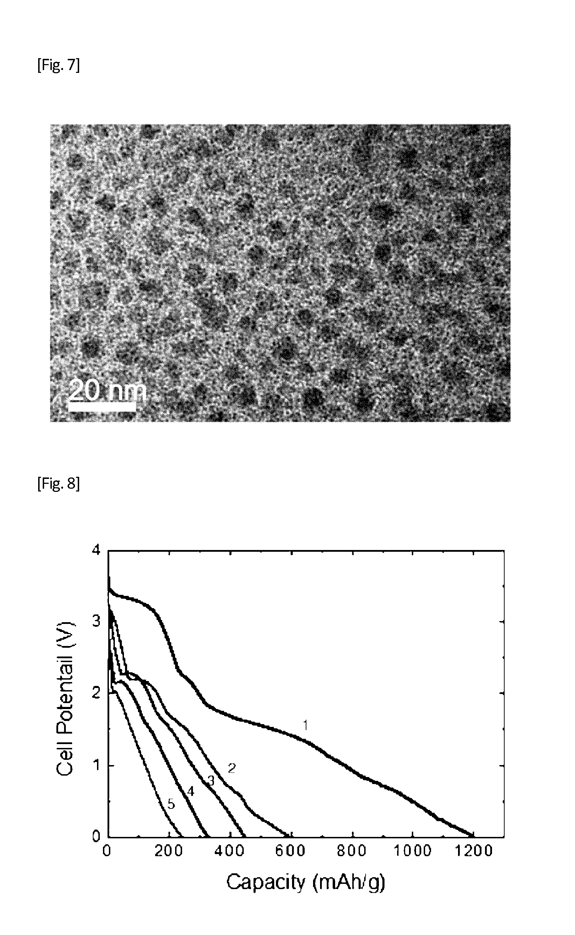

FIG. 7 illustrates an FIB-TEM image of the state in which the lithium ions and the silicon of the anode are coupled with each other; and
FIG. 8 illustrates the results of testing of charging/discharging in the comparative example.

### Mode for Invention

Below is a more detailed description of the present invention through the following examples, which are merely illustrate but are not construed to limit the present invention.

### Example 1

### Synthesis of SPEO -SiNPs

Inside a glove box, SiCl₄ (100 µL) and tetraoctylammonium bromide (1.5 g) were dissolved in toluene (100 mL) and stirred for 1 hr. Lithium aluminum hydride (1 M, 2 mL) was slowly added to tetrahydrofuran and stirred for 3 hr. SiNPs substituted with hydrogen was collected with methanol (20 mL). Hydrosilylation of H-SiNPs was performed by reacting ω-alkylsubstituted polyethylenemethylether (M.W=1,310, 0.5 g, available from Power Source) in the presence of a HPtCl₆·6H₂O (0.01 mmol) catalyst and stirring the resulting mixture for 3 hr. The synthesized PEO-SiNPs was extracted into a water layer using sonication, and the unreacted materials were removed via dialysis. (cellulose acetate bag, Spectrum Laboratories, MWCO 2 kDa).

### Synthesis of polymer electrolyte membrane

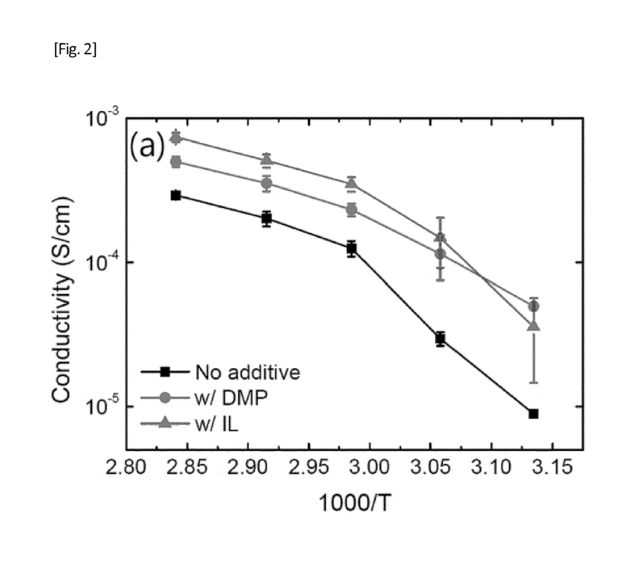

A polystyrene-block-polyethylene oxide (PS-PEO, 40.5-*b*-30.8 kg/mol, Mw/Mn=1.08) copolymer was synthesized in a laboratory via a high vacuum anionic polymerization method described in Reference paper (N. Hadjichristidis, et al., Polym. Sci., Part A: Polym. Chem. 2000, 38, 3211-3234). The properties of the synthesized polymer were analyzed using gel permeation chromatography (GPC) and hydrogen-nuclear magnetic resonance (NMR, Bruker AVB-300). A polyethylene homopolymer (average molecular weight = 3.4 kg/mol) used in this research was purchased from Sigma Aldrich. The polymer electrolyte was prepared by mixing PS-PEO and PEO at a weight ratio of 1:1. The PEO chain was doped with LiClO₄ salt in which the ratio of [Li⁺]/[EO] was fixed to 0.056. In a glove box filled with argon, a predetermined amount of 1-ethyl-3-methylimidazolium tetrafluoroborate ([EMlm][BF4], ≥98% HPLC grade, Sigma Aldrich) or dimethylphthalate (DMP, ≥99%, Sigma Aldrich) was placed in a glass vial along with the polymer, and a solvent comprising methanol and tetrahydrofuran at a ratio of 50/50 vol% was also added in an amount of about 10 wt%. Inhibitor-free anhydrous tetrahydrofuran (THF, ≥99.9%, Sigma Aldrich) was used without additional purification, and methanol was degassed three times before use. The mixture was stirred overnight at room temperature, and the dried sample was placed between sheets having a thickness of 300 µm and pressed using a mechanical press at 80°C and 2000 psi. The entire preparation procedure was performed in the glove box under conditions of oxygen and moisture below 0.1 ppm. The structure of the polymer electrolyte was measured using SAXS and TEM. The results are shown in FIG. 1. Also, the ionic conductivity of the polymer electrolyte was measured in an inert atmosphere. The results are shown in FIG. 2.

### Coin-type half cell

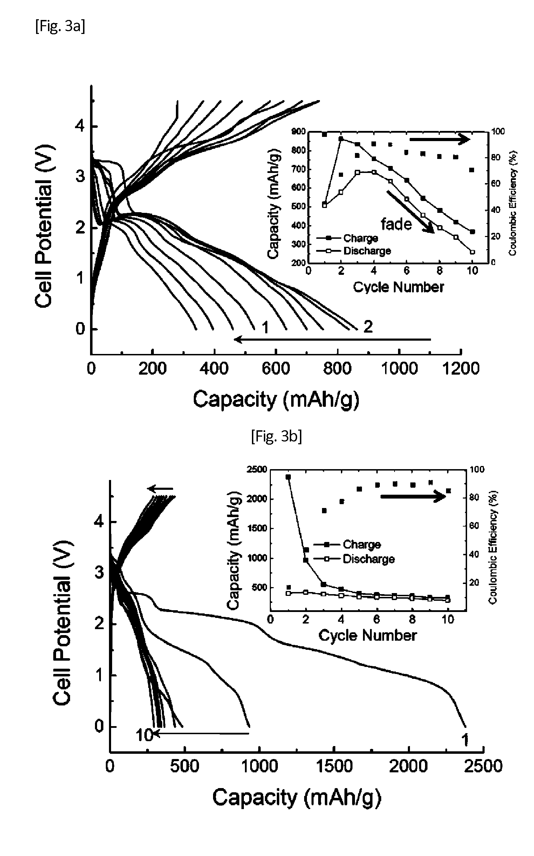

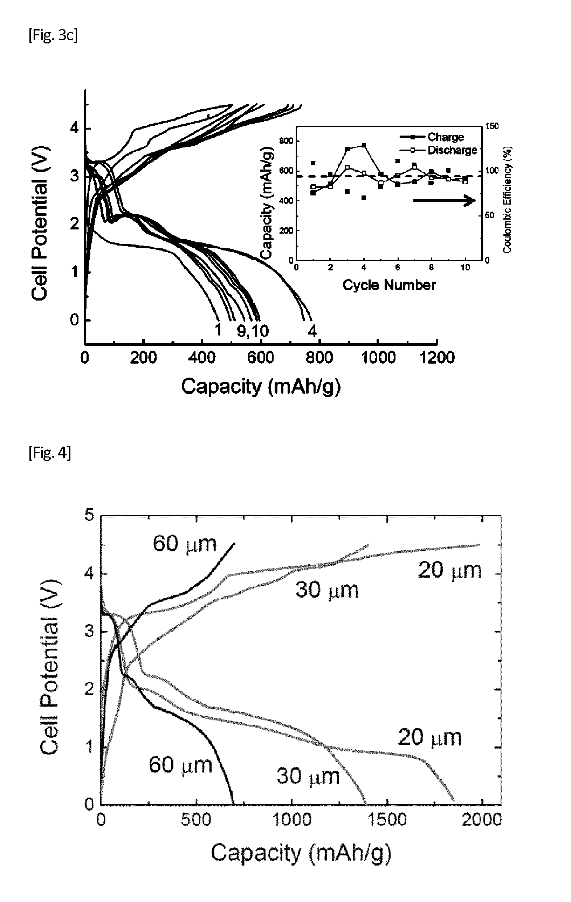

For a battery test, the anode was formed by mixing PEO-SiNPs, super P carbon black, and polyvinylidene fluoride (PVDF, Solef) at a weight ratio of 8:1:1 with N-methyl-2-pyrrolidone (NMP, Aldrich). A coin-type half-cell was composed of the anode material, the polymer electrolyte, and lithium foil. No separator was used. The loading of the active material was 2 mg/cm², and cycling tests were performed at the same charging/discharging rates of 0.2 A/g. The capacity values measured up to 10 cycles are shown in FIG. 3.

### Example 2

This example was performed in the same manner as in Example 1, with the exception that 30 parts by weight of DMP as a nonionic plasticizer was added to 100 parts by weight of the polymer electrolyte membrane.

### Example 3

This example was performed in the same manner as in Example 1, with the exception that 10 parts by weight of [EMlm][BF4] as an ionic liquid was added to 100 parts by weight of the polymer electrolyte membrane.

### Example 4

This example was performed in the same manner as in Example 2, with the exception that the thickness of the anode was changed to 60 µm. The capacity values are shown in FIG. 4

### Example 5

This example was performed in the same manner as in Example 2, with the exception that the thickness of the anode was changed to 30 µm. The capacity values are shown in FIG. 4

### Example 6

This example was performed in the same manner as in Example 2, with the exception that the thickness of the anode was changed to 20 µm. The capacity values are shown in FIG. 4

### Comparative Example

This example was performed in the same manner as in Example 1, with the exception that silicon particles having a size of 50 µm and not surface-treated were used.

## Claims

1. A lithium-polymer battery, comprising an anode including anode active particles having a polymer formed on a surface thereof; a cathode; and a polymer electrolyte including a block copolymer.

2. The lithium-polymer battery of claim 1, wherein the anode active particles are silicon nanoparticles.

3. The lithium-polymer battery of claim 1, wherein the polymer formed on the surface of the anode active particles is polyalkylene oxide.

4. The lithium-polymer battery of claim 3, wherein the polyalkylene oxide is polyethylene oxide.

5. The lithium-polymer battery of claim 1, wherein the block copolymer is a self-assembling block copolymer.

6. The lithium-polymer battery of claim 1, wherein the polymer electrolyte has a lamellar structure.

7. A lithium-polymer battery, comprising an anode including anode active particles having a polymer formed on a surface thereof; a cathode; and a polymer electrolyte.

8. The lithium-polymer battery of claim 7, wherein the anode active particles are silicon nanoparticles having polyethylene oxide bound thereto, and the polyethylene oxide has a weight average molecular weight of 200 ∼ 20,000.

9. The lithium-polymer battery of claim 8, wherein a weight ratio of polyalkylene oxide to silicon nanoparticles is 1:10 ∼ 10:1.

10. The lithium-polymer battery of claim 8, wherein the silicon nanoparticles have a size of 1 ∼ 100 nm.

11. The lithium-polymer battery of claim 7, wherein the anode comprises 50 wt% or more of the silicon nanoparticles having polyalkylene oxide bound thereto.

12. The lithium-polymer battery of claim 8, wherein the silicon nanoparticles are amorphous.

13. A secondary battery, comprising an anode; a cathode; and a polymer electrolyte, wherein the polymer electrolyte includes a self-assembling block copolymer.

14. The secondary battery of claim 13, wherein the self-assembling block copolymer includes a hydrophobic block and a hydrophilic block.

15. The secondary battery of claim 14, wherein the hydrophobic block is polystyrene.

16. The secondary battery of claim 14, wherein the hydrophilic block is a polyethylene oxide block.

17. The secondary battery of claim 14, wherein the hydrophobic block has a higher glass transition temperature by at least 20°C than that of the hydrophilic block.

18. The secondary battery of claim 14, wherein a polymer of the polymer electrolyte comprises a polystyrene-block-polyethylene oxide copolymer and polyethylene oxide.

19. The secondary battery of claim 14, wherein the polymer electrolyte further includes a nonionic plasticizer.

20. The secondary battery of claim 14, wherein the nonionic plasticizer is DMP (Dimethylphthalate).

21. The secondary battery of claim 14, wherein the polymer electrolyte further includes a nonvolatile ionic liquid.

22. A secondary battery, comprising an anode including silicon nanoparticles having a polymer bound thereto; a cathode; and a polymer electrolyte, wherein a thickness of the anode is 60 µm or less.

23. A polymer electrolyte for a secondary battery, comprising:
a self-assembling block copolymer including a hydrophobic block and a hydrophilic block; and
a nonionic plasticizer, a nonvolatile ionic liquid, or combinations thereof.

24. An anode for a secondary battery, including silicon nanoparticles having polyethylene oxide bound to a surface thereof as an anode active material.
